# EUROPÄISCHE PATENTSCHRIFT

(11) **EP 2 310 441 B1**
(45) Veröffentlichungstag und Bekanntmachung des Hinweises auf die Patenterteilung: **13.03.2013**
(21) Anmeldenummer: 09780563.4
(22) Anmeldetag: 14.07.2009
(51) Int. Cl.: C08G 77/08, C08L 83/04, C09D 183/04, C09J 183/04, C08G 77/18, B32B 5/20, D06N 3/12

(54) **VERFAHREN ZUR HERSTELLUNG VON SILICONBASIERTEN SCHÄUMEN**
METHOD FOR THE PRODUCTION OF FOAMS ON SILICON BASIS
PROCÉDÉ DE PRÉPARATION DE MOUSSES À BASE DE SILICONE

(30) Priorität: 07.08.2008 DE 102008041097
(43) Veröffentlichungstag der Anmeldung: 20.04.2011
(73) Patentinhaber: Wacker Chemie AG, 81737 München (DE)
(72) Erfinder: PESCHKO, Christian, 84489 Burghausen (DE); MÜLLER, Johann, 84524 Neuötting (DE)
(74) Vertreter: Fritz, Helmut
(86) Internationale Anmeldenummer: PCT/EP2009/058986
(87) Internationale Veröffentlichungsnummer: WO 2010/015491

(56) Entgegenhaltungen:
- DE-A1- 19 811 484
- US-A- 6 020 389

## Beschreibung

Die Erfindung betrifft ein Verfahren zur Herstellung platinfreier, siliconbasierter Schäume, Schaumschichten, geschäumter Formkörper, Kleb- oder Dichtmassen sowie siliconbasierte Schäume.

Geschäumte Kunststoffartikel sowie entsprechende Treibsysteme zur Schaumbildung sind mit zahlreichen Beispielen aus der Literatur und dem Patentwesen Stand der Technik. Das Schäumen von Kunststoffteilen wird vor allem zur Gewichtsreduktion und zur Erzielung neuer Eigenschaften durchgeführt. In der Elastomertechnik kommt als gewünschtes Merkmal die erhöhte Kompressibilität hinzu. Um einen Schaum mit möglichst hoher Beständigkeit beispielsweise gegenüber Temperatureinwirkung oder Chemikalien zu erhalten, werden bevorzugt Siliconelastomere als Kautschukbasis verwendet.
Elastomerschäume werden meist mittels chemischer Treibmittel erzeugt, welche beispielsweise bei erhöhter Temperatur oder durch Zusatz von Hilfsstoff-Gasen, wie beispielsweise Stickstoff, Sauerstoff, CO₂, Wasserstoff und Wasserdampf, freisetzen. In EP 0 553 889 B1 wird beispielsweise mittels Wasser in EP 0 506 241 B1 mittels Alkohol geschäumt. Beide Schaummittel haben jedoch den Nachteil, dass sie als polare Substanzen mit Silicon prinzipiell unverträglich sind. Daher müssen sie in der Elastomermatrix emulgiert werden, was zu starken Einschränkungen bezüglich Handhabung und Stabilität führt, es kommt beispielsweise zu Entmischungsphänomenen und Inhomogenitäten.
Weitere Treibsysteme, wie beispielsweise Phosphine, werden etwa in der Patenschrift EP 0 355 429 B1 beschrieben und sind mit denselben Problemen behaftet.

Wasserstoff-basierende Schäume, wie beispielsweise in EP 0 416 229 A2 beschrieben, sind bezüglich ihres Einsatzes sehr eingeschränkt, da sie nach Komponentenvermischung in situ eingesetzt werden müssen. Zudem weisen auch diese Schäume, obwohl sie niedrige Dichten erreichen können, nur geringe mechanische Festigkeiten auf.

Des Weiteren ist der Einsatz klassischer, Stickstoff-basierter Treibmittel, wie beispielsweise Azodicarbonamid und 2,2'-Azobis-isobutyronitril AIBN, aufgrund toxikologischer Überlegungen, wie beispielsweise durch Reinl, W., Erkrankungen durch Tetramethylbernsteinsäuredinitril bei der Schaumstoffherstellung, Archiv für Toxikologie, Band 16, Seite 367380, 1957 und Azobisisobutyronitrile, Health Council of the Netherlands, 2002, Publication 2002/01 OSH beschrieben, sowie aufgrund des mäßigen Druckverformungsrestes, wie Beispiel 8, Tabelle 1 dieser Schrift zeigt, nicht als zielführend anzusehen.

Schließlich werden in der Literatur, beispielsweise in den Patentschriften DE 197 50 697 A1 und EP 0 751 173 B1, CO₂-bildende Schäume erwähnt, die auf der Zersetzung von Carbonaten beruhen. Nachteile dieser Schäume sind die eingeschränkte Mischbarkeit der Feststoffe mit der Polymermischung sowie die inhomogene, wenig reproduzierbare Schaumstruktur. DE 102005053697A1 beschreibt expandierbare Siliconzusammensetzungen, denen zur Schaumbildung in Feststoffen gebundene Treibmittel zugesetzt sind, beispielsweise in Form von Salzen die Interchalat- oder Kristallflüssigkeit enthalten. Bevorzugt wird die Schaumbildung dabei durch Wasserdampf verursacht. Nachteilig ist auch hier die eingeschränkte Mischbarkeit der Feststoffe mit der Polymermischung und der Umstand, dass diese nicht zum Netzwerkaufbau beitragen.

Neben diesen von Nachteilen geprägten Methoden zur Schaumerzeugung weisen die bekannten siliconbasierten Abmischungen weitere Einschränkungen in der Anwendung und Verarbeitung auf.
Bisherige Anwendungen von geschäumten Siloxan-haltigen Massen zeichnen sich durch teils mehrstufige und damit aufwändige Herstellungs- und Verarbeitungsmethoden aus, bzw. basieren auf Silicon-Abmischungen welche mittels teurer Platin-Katalyse oder peroxidisch vernetzt werden müssen.
So wird in JP 7292504 A2 für die Herstellung lediglich von Schwimmanzug-Cups ein Siliconschaum-Vorformling durch Additionsvernetzung mit Platin hergestellt und auf einen Thermoplast aufgebracht.
In KR 20010077825 A wird ein Silicon auf Wachspapier vorgeschäumt und mit einem vorher Silicon-haftbeschichteten Textil mittels Transferbeschichtung verklebt, um eine Art Kunstleder zu erhalten.
JP 63282381 A2 verfährt ähnlich aufwändig (mehrstufig), indem Siliconschaum mit Hilfe von peroxidvernetztem (daher geruchsintensivem) Festsilicon auf Textil verklebt wird.
DE 41 01 884 A1 schließlich erwähnt eine additionsvernetzende, also Platin-abhängige Siliconmischung, die mittels Druckluft zum Schäumen gebracht wird.
Nachteilig an den durch eine Hydrosilylierung härtbaren Polymeren ist, dass es sich bei den zur Härtung benötigten Edelmetallkatalysatoren um sehr hochpreisige Rohstoffe handelt. Die hohen Kosten der Edelmetallkatalysatoren sind insbesondere problematisch, da die Katalysatoren in der Regel im Produkt verbleiben und nicht zurück gewonnen werden können.

### Als Alternative zur Edelmetall-katalysierten

Additionsvernetzung oder zur peroxidischen Vernetzung von Siliconabmischungen ist die Bildung des Polymernetzwerkes durch Kondensation von Silanolgruppen ≡Si-O-H bekannt.
Werden diese reaktiven Einheiten aus in der Abmischung vorhandenen hydrolysierbaren Silylgruppen wie beispielsweise ≡Si-O-Ac oder ≡Si-Cl gebildet, so wird die Aushärtungsgeschwindigkeit durch die Diffusion des Wassers zu den hydrolysierbaren Silylgruppen im zu härtenden Polymer bestimmt. Insbesondere die Aushärtung dickerer Schichten, die beispielsweise bei der Erzeugung von Schäumen auftreten, stellt häufig einen zu langsamen Prozess dar, der einen Einsatz diester Polymere für eine Vielzahl von Anwendungen erschwert oder sogar unmöglich macht.

Die Abscheidung von durch Zersetzung von Alkoxysilanolen erzeugten SiO₂-Schichten auf Halbleitersubstraten wird in US 7135418 B1 beschrieben. Dazu wird eine Oberfläche zur Abscheidung von SiO₂ für kurze Zeit wiederholt einer Atmosphäre eines Siliciumdioxid-freisetzenden Prekursors, der tert.-Pentoxysilyl-Gruppen trägt, ausgesetzt. Das Siliciumdioxid bildet sich dabei bei erhöhter Temperatur beispielsweise aus Tris(tert.-pentoxy)silanol unter Abspaltung von u.a. Wasser und Alkenen.

In Adv. Mater. 2001, 13, 331-335 (Don Tilley et al.) ist die Herstellung von Mischoxiden durch die Thermolyse von molekularen Vorstufen, die Tris(tert.-butoxy)silyl-Gruppen tragen beschrieben. Dabei erfolgt die Bildung der Mischoxide bei Temperaturen zwischen 90 °C und 150 °C ohne Zutritt von (Luft-)Feuchtigkeit unter Abspaltung von Isobutylen und Wasser.

In WO 2005/035630 A1 werden tert.-Butoxy-funktionelle Siliconharze beschrieben.

Bull. Chem. Soc. Japan 1969, 42, 1118-1123 (Y. Abe et al.) beschreibt die unkatalysierte thermische Umwandlung von tert.-Butoxysil(ox)anen in hochmolekulare Verbindungen.

J. Beckmann et al. beschreiben in Appl. Organomet. Chem. 2003, 17, 52-62 die Synthese und unkatalysierte thermische Kondensation von tert.-Butoxysilanolen.

In J. Photopolym. Sci. Techn. 1992, 5, 181-190 beschreiben M. Sakata et al. die Umwandlung tert.-Butoxy-funktioneller Siloxane zu SiO₂ durch Elektronenbestrahlung in Gegenwart von Photosäuren.

Die Nutzung der thermischen Zersetzung von Alkoxysilanolen bzw. Alkoxysilylgruppen zur Herstellung von Netzwerken wie beispielsweise Schäumen aus Siloxanen und organischen Polymeren durch die Kondensationsreaktion von entstehenden ≡Si-O-H Gruppen wurde in der Literatur bislang noch nicht beschrieben.

Bisher ist kein Verfahren bekannt, welches die Erzeugung und Verarbeitung von siliconbasierten Polymerabmischungen zu Schäumen ermöglicht, das kostengünstig und technisch leicht umsetzbar ist und die genannten Nachteile nicht oder weitestgehend nicht aufweist.

US 6 020 389 beschreibt ein Verfahren zur Schäumung von Mischungen aus bifunktionell terminierten Diorganopolysiloxanen und Acyloxysilanvernetzungsmitteln. Die Mischungen enthalten als Treibmittel ein Hydrogencarbonat.

In DE 19811484 sind Schäume beschrieben, die aus α,ω-Dihydroxypolydimethylsiloxan, Silanvernetzer und als Treibmittel Ammoniumcarbonat, Ammoniumhydrogencarbonat oder Alkalihydrogencarbonat hergestellt werden.

Gegenstand der Erfindung ist ein Verfahren zur Herstellung von siliconbasierten Schäumen aus siliconhaltigen Polymerabmischungen **(A),**
bei dem mindestens eine Verbindung **(V)** eingesetzt wird, die zur Bildung des Polymernetzwerks beiträgt und die mindestens eine Alkoxysilylgruppe der allgemeinen Formeln [1a], [1b] oder [1c]

≡Si-O-C(R¹)(R²)(R³) [1a],

=Si(R⁵)-O-C(R¹)(R²)(R³) [1b],

≡Si-O-C(O)-U [1c],

trägt, aus der bei der Härtung der Polymerabmischungen **(A)** mindestens ein Molekül **(XY)** abgespalten wird, welches bei der Verarbeitung gasförmig ist und eine Schaumbildung in der Polymerabmischung **(A)** verursacht,
sowie einen Katalysator **(K),** der ausgewählt wird aus einer Brönstedt-Säure, Brönstedt-Base, Lewis-Säure und Lewis-Base,
wobei
**R¹, R², R³** Wasserstoff, ein Halogen, einen über ein Kohlenstoffatom gebundenen Rest, wobei die Reste **R¹, R², R³** miteinander verbunden sein können, oder einen zweiwertigen über ein Kohlenstoffatom gebundenen Rest, der zwei Alkoxysilylgruppen der allgemeinen Formel [1a], [1b] oder [1c] verbindet, mit der Maßgabe, dass höchstens 2 der Reste **R¹, R², R³** Wasserstoff bedeuten und Alkoxysilylreste der Formel ≡Si-O-CH₂-R⁴ ausgenommen sind,
**R⁴** einen unverzweigten aliphatischen Kohlenwasserstoffrest mit 1-12 Kohlenstoffatomen,
**R⁵** Wasserstoff, ein Halogen, einen unsubstituierten oder substituierten aliphatischen, olefinischen oder aromatischen Kohlenwasserstoffrest mit 1-12 Kohlenstoffatomen, eine OH-Gruppe, eine -OR⁶-Gruppe, OC(O)R⁶-Gruppe, -OC(O)OR⁶-Gruppe, -OC(O)OM-Gruppe, einen Metalloxyrest M-O-, oder CH₂-W, wobei W ein Heteroatom darstellt, dessen freie Valenzen durch Kohlenwasserstoffreste abgesättigt sind,
**U** eine -OR⁶-Gruppe, oder eine -NR^{6a}R^{6b}-Gruppe,
**R⁶, R^{6a}, R^{6b}** Wasserstoff, einen unsubstituierten oder substituierten aliphatischen, olefinischen oder aromatischen Kohlenwasserstoffrest mit 1-12 Kohlenstoffatomen und
**M** ein Metallatom, das freie Valenzen aufweisen kann, die durch Liganden abgesättigt sind, bedeuten und
wobei Polymerabmischungen **(A)** ausgeschlossen sind, die bei der Vernetzung SiO₂ bilden.

Aus den siliconhaltigen Polymerabmischungen **(A)** können siliconbasierte Schäume hergestellt werden, bei denen
1) der Netzwerkaufbau ohne Einsatz von Edelmetallkatalysatoren, wie Platinmetallen, insbesondere ohne Platin erfolgt,
2) die Schaumbildung durch Spaltprodukte erfolgt, die beim Aufbau des Polymernetzwerkes gebildet werden und
3) fließfähige Abmischung erhalten werden mit ausreichend langer Verarbeitungszeit für die Erzeugung von Schäumen bzw. von Schäumen auf Substraten.

Die Bildung von Schäumen erfolgt durch Härtung der Polymerabmischungen **(A)** als Formkörper oder Schichten auf oder zwischen Trägern. Die Polymerabmischungen **(A)** können in dicker Schicht ohne Zutritt von (Luft-)Feuchtigkeit thermisch gehärtet werden.

In den allgemeinen Formeln [1a], [1b] und [1c] können die Siliciumatome an den mit =Si bezeichneten Valenzen mit beliebigen Resten abgesättigt sein.

Die Reste **R¹, R², R³** bedeuten insbesondere Wasserstoff, Chlor, einen unsubstituierten oder substituierten aliphatischen, olefinischen oder aromatischen Kohlenwasserstoffrest oder einen über ein Kohlenstoffatom gebundenen Siloxanrest, eine Carbonylgruppe -C(O)R⁶, eine Carbonsäureestergruppe -C(O)OR⁶, eine Cyanogruppe -C≡N oder eine Amidgruppe -C(O)NR^{6a6b}, wobei **R⁶, R^{6a}, R^{6b}** die oben angegebenen Bedeutungen annehmen. Die Reste **R¹, R², R³** weisen vorzugsweise 1 bis 12, insbesondere 1 bis 6 Kohlenstoffatome auf. Bevorzugt stellen die Reste **R¹, R², R³** Methyl-, Ethyl-, Propyl-, Vinyl-, Phenyl- oder Carboxylreste -C(O)OCH₃ dar.
Besonders bevorzugt stellen die Reste **R¹, R², R³** Methyl-, Ethyl-, oder Propylreste dar.
Zwei oder drei der Reste **R¹, R², R³** können miteinander verbunden sein, beispielsweise können **R²** und **R³** aus einem Diol gebildet worden sein.
Bei den Resten **R⁵** handelt es sich bevorzugt um Wasserstoff, Chlor, Methyl, Ethyl, Propyl, Phenyl, Methoxy, Ethoxy, Acetoxy, Vinyl, OH, Carbonat, einen Metalloxyrest -O-M oder einen Rest - CH₂-W, wobei das Heteroatom W vorzugsweise N, O, P, S, darstellt dessen freien Valenzen vorzugsweise durch Alkyl- oder Arylreste mit vorzugsweise 1 bis 10 Kohlenstoffatomen abgesättigt sind.
Die Reste **R⁶, R^{6a}, R^{6b}** bedeuten bevorzugt Wasserstoff, Methyl, Ethyl, Propyl, Vinyl oder Phenyl.

Die Reste M bedeuten vorzugsweise Metallatome, die ausgewählt werden aus Lithium, Natrium, Kalium, Calcium, Magnesium, Bor, Aluminium, Zirkonium, Gallium, Eisen, Kupfer, Titan, Zink, Bismuth, Cer und Zinn. Im Falle mehrwertiger Metalle sind die freien Valenzen am Metall durch Halogenide, vorzugsweise Chlorid und Bromid, Alkoxidgruppen, vorzugsweise Methoxy-, Ethoxy- oder Isopropoxyreste, Alkylreste, vorzugsweise Methyl-, Ethyl- und Phenylgruppen, Carbonsäurereste, vorzugsweise Carbonsäurereste mit 2-16 Kohlenstoffatomen oder gängige ein-und mehrzähnige Komplexliganden, die typischerweise in der metallorganischen Synthese zum Einsatz kommen (z.B. Acetylaceton), abgesättigt.

Bevorzugt tragen die Reste ≡Si-O-C(R¹)(R²)(R³) der allgemeinen Formel [1a] in β-Position zum Sauerstoff einen Wasserstoff. Bevorzugte Beispiele sind Gruppen der Formeln [3]-[9],

Si-O-C(CH₃)₃ [3],

Si-O-C(CH₃)₂C₂H₅ [4],

Si-O-C(CH₃)₂C₆H₅ [5],

Si-O-C(CH₃)₂C(O)OCH₃ [6],

Si-O-C(CH₃)[C(O)OC₂H₅]₂ [7],

Si-O-CH(CH₃)C₆H₅ [8],

Si-O-CH(CH₃)C(O)OCH₃ [9],

Bei den Verbindungen **(V)** kann es sich um niedermolekulare Verbindungen **(N)** oder hochmolekulare bzw. polymere Verbindungen **(P)** handeln.

In einer bevorzugten Ausführungsform der Erfindung handelt es sich bei den Verbindungen **(V)** um niedermolekulare Verbindungen **(N),** die mindestens eine Gruppe der allgemeinen Formel [1a] tragen. Typischerweise liegen die niedermolekularen Verbindungen **(N)** in Form von Silanen der allgemeinen Formel [10]

R^{5a}₄₋ₙSi(O-C(R¹)(R²)(R³))ₙ [10]

oder deren Hydrolyse- und Kondensationsprodukten vor,
wobei
**n** die Werte 1, 2 oder 3
**R^{5a}** die Bedeutungen von **R⁵** und
**R¹, R², R³** und **R⁵** die oben genannten Bedeutungen aufweisen.

Besonders bevorzugt kommen als Verbindungen **(N)** die Substanzen der Formeln [11]-[22],

LSi(O-C(CH₃)₃)₃ [11],

L₂Si(O-C(CH₃)₃)₂ [12],

L₃Si(O-C(CH₃)₃) [13],

LSi(O-C(CH₃)₂C₂H₅)₃ [14],

L₂Si(O-C(CH₃)₂C₂H₅)₂ [15],

L₃Si(O-C(CH₃)₂C₂H₅) [16],

LSi(O-CH(CH₃)(C₆H₅))₃ [17],

L₂Si(O-CH(CH₃)(C₆H₅))₂ [18],

L₃Si(O-CH(CH₃)(C₆H₅)) [19],

LSi(O-CH(CH₃)C(O)OCH₃)₃ [20],

L₂Si(O-CH(CH₃)C(O)OCH₃)₂ [21],

L₃Si(O-CH(CH₃)C(O)OCH₃) [22].

und deren Hydrolyse- und Kondensationsprodukte zum Einsatz,
wobei
- L: Cl, OH, Methyl, Ethyl, Vinyl, Phenyl, einen Carboxylrest mit 1-6 Kohlenstoffatomen, einen Alkoxyrest mit 1-6 Kohlenstoffatomen oder einen Metalloxyrest M^{a}-O- bedeuten und
- **M^{a}**: die Bedeutungen von **M** annimmt.

Ganz besonders bevorzugt kommen als Verbindungen (N) die Substanzen der Formeln [23]-[70],

HOSi(O-C(CH₃)₃)₃ [23],

(HO)₂Si(O-C(CH₃)₃)₂ [24],

(HO)₃Si(O-C(CH₃)₃) [25],

HOSi(O-C(CH₃)₂C₂H₅)₃ [26],

(HO)₂Si(O-C(CH₃)₂C₂H₅)₂ [27],

(HO)₃Si(O-C(CH₃)₂C₂H₅) [28],

HOSi(O-CH(CH₃)(C₆H₅))₃ [29],

(HO)₂Si(O-CH(CH₃)(C₆H₅))₂ [30],

(HO)₃Si(O-CH(CH₃)(C₆H₅)) [31],

HOSi(O-CH(CH₃)C(O)OCH₃)₃ [32],

(HO)₂Si(O-CH(CH₃)C(O)OCH₃)₂ [33],

(HO)₃Si(O-CH(CH₃)C(O)OCH₃) [34],

MeOSi(O-C(CH₃)₃)₃ [35],

(MeO)₂Si(O-C(CH₃)₃)₂ [36],

(MeO)₃Si(O-C(CH₃)₃) [37],

MeOSi(O-C(CH₃)₂C₂H₅)₃ [38],

(MeO)₂Si(O-C(CH₃)₂C₂H₅)₂ [33],

(MeO)₃Si(O-C(CH₃)₂C₂H₅) [40],

MeOSi(O-CH(CH₃)(C₆H₅))₃ [41],

(MeO)₂Si(O-CH(CH₃)(C₆H₅))₂ [42],

(MeO)₃Si(O-CH(CH₃)(C₆H₅)) [43],

MeOSi(O-CH(CH₃)C(O)OCH₃)₃ [44],

(MeO)₂Si(O-CH(CH₃)C(O)OCH₃)₂ [45],

(MeO)₃Si(O-CH(CH₃)C(O)OCH₃) [46],

MeC(O)OSi(O-C(CH₃)₃)₃ [47],

(MeC(O)O)₂Si(O-C(CH₃)₃)₂ [48],

(MeC(O)O)₃Si(O-C(CH₃)₃) [49],

MeC(O)OSi(O-C(CH₃)₂C₂H₅)₃ [50],

(MeC(O)O)₂Si(O-C(CH₃)₂C₂H₅)₂ [51],

(MeC(O)O)₃Si(O-C(CH₃)₂C₂H₅) [52],

MeC(O)OSi(O-CH(CH₃)(C₆H₅))₃ [53],

(MeC(O)O)₂Si(O-CH(CH₃)(C₆H₅))₂ [54],

(MeC(O)O)₃Si(O-CH(CH₃)(C₆H₅)) [55],

MeC(O)OSi(O-CH(CH₃)C(O)OCH₃)₃ [56],

(MeC(O)O)₂Si(O-CH(CH₃)C(O)OCH₃)₂ [57],

(MeC(O)O)₃Si(O-CH(CH₃)C(O)OCH₃) [58],

ClSi(O-C(CH₃)₃)₃ [59],

Cl₂Si(O-C(CH₃)₃)₂ [60],

Cl₃Si(O-C(CH₃)₃) [61],

ClSi(O-C(CH₃)₂C₂H₅)₃ [62],

Cl₂Si(O-C(CH₃)₂C₂H₅)₂ [63],

Cl₃Si(O-C(CH₃)₂C₂H₅) [64],

ClSi(O-CH(CH₃)(C₆H₅))₃ [65],

Cl₂Si(O-CH(CH₃)(C₆H₅))₂ [66],

Cl₃Si(O-CH(CH₃)(C₆H₅)) [67],

ClSi(O-CH(CH₃)C(O)OCH₃)₃ [68],

Cl₂Si(O-CH(CH₃)C(O)OCH₃)₂ [69],

Cl₃Si(O-CH(CH₃)C(O)OCH₃) [70],

und deren Hydrolyse- und Kondensationsprodukte zum Einsatz, wobei Me einen Methylrest bedeutet.

In einer weiteren Ausführungsform der Erfindung sind die Verbindungen (V) hochmolekulare bzw. polymere Verbindungen **(P),** in denen die Alkoxysilylgruppen der allgemeinen Formeln [1a], [1b] oder [1c] über die freien Valenzen am Siliciumatom an einen oder mehrere Polymerreste **(PR)** kovalent angebunden sind. Ebenso können auch die Reste **R¹, R², R³** Polymerreste **(PR)** darstellen oder enthalten, wobei diese Reste **(PR)** über einen Kohlenstoffspacer an das Kohlenstoffatom der allgemeinen Formeln [1a], [1b] oder [1c] gebunden sind.

Dabei können als Polymerreste **(PR)** sämtliche organischen Polymeren und Organopolysiloxane zum Einsatz kommen. Beispiele für geeignete Polymere, in unverzweigter und verzweigter Form, sind Polyolefine, z.B. Polyethylen, Polystyrol, Polypropylene, Polyether, Polyester, Polyamide, Polyvinylacetate, Polyvinylalkohole, Polyurethane, Polyacrylate, Epoxidharze, Polymethacrylate sowie Organopolysiloxane, wie lineare, verzweigte und cyclische Organopolysiloxane und Organopolysiloxanharze und deren Copolymere.
Beispiele für Polymere **(P),** in denen die Polymerreste **(PR)** kovalent an die freien Valenzen am Siliciumatom der Alkoxysilylgruppen der allgemeinen Formeln [1a], [1b] oder [1c] angebunden sind, sind Polyethylene oder Polyvinylacetate, die kettenständig Alkoxysilylgruppen der allgemeinen Formel [1] oder [2] tragen.
Beispiele für Polymere **(P),** in denen die Polymerreste **(PR)** jeweils unabhängig voneinander den Resten **R¹, R², R³** entsprechen, oder jeweils unabhängig voneinander Teile der Reste **R¹, R², R³** darstellen, sind Polysiloxane der allgemeinen Formel [71],

≡Si-O-C(R¹)(R²)(CH₂CH₂-[Si(CH₃)₂-O]ₓ-Si(CH₃)₃) [71],

wobei
x eine ganze Zahl zwischen 10 und 100 darstellt und die mit ≡Si bezeichneten freien Valenzen des Siliciumatoms mit beliebigen Resten abgesättigt sind.

Bevorzugte Polymere **(P)** sind lineare, verzweigte und cyclische Organopolysiloxane der allgemeinen Formel [72],

(R⁷₃SiO_{1/2})ₐ(R⁷₂SiO_{2/2})_{b}(R⁷SiO_{3/2})_{c}(SiO_{4/2})_{d} [72],

wobei
- **R⁷**: die Bedeutung des Restes **R⁵** und mindestens ein Rest **R⁷** die Bedeutung -O-C(R¹)(R²)(R³) annimmt,
- **a, b, c** und **d**: einen ganzzahligen Wert von größer oder gleich 0 bedeuten, mit der Maßgabe, dass die Summe aus **a + b + c** mindestens 1 ist und
- **R¹, R², R³** und **R⁵**: jeweils unabhängig voneinander die oben angegebenen Bedeutungen annehmen können.

Die Reste **R⁷** bedeuten bevorzugt eine Methyl-, Ethyl-, Propyl-, Butyl-, Octyl-, Phenyl-, OH-Gruppe, Methoxy, Ethoxy, Propoxy, Butoxy, Acetoxy oder eine Gruppe -O-C(R₁)(R₂)(R³).

Besonders bevorzugt handelt es sich bei den Polymeren **(P)** um lineare Siloxane, die in terminaler oder lateraler Position Alkoxysilylgruppen der allgemeinen Formeln [1a], [1b] oder [1c] tragen.

Zur Herstellung der Alkoxysilyl-funktionellen Polymere **(P)** können gängige, dem Fachmann geläufige Syntheseverfahren zum Einsatz kommen. Beispielsweise können Alkoxysilyl-funktionelle Polyethylene durch koordinative Polymerisation z.B. mittels Ziegler-Natta- oder Metallocen-Katalysatoren oder radikalische Pfropfung eines vinylfunktionellen Alkoxysilans, das Gruppen der allgemeinen Formeln [1a], [1b] oder [1c] trägt, auf ein Polyethylen erhalten werden. Die Herstellung eines Alkoxysilyl-funktionellen Polyvinylacetats kann beispielsweise durch radikalische Polymerisation eines vinylfunktionellen Alkoxysilans, das Gruppen der allgemeinen Formeln [1a], [1b] oder [1c] trägt, mit Vinylacetat erhalten werden. Zur Herstellung eines Alkoxysilan-modifizierten Polymethacrylats, das Gruppen der allgemeinen Formeln [[1a], [1b] oder [1c] trägt, kann ein methacrylfunktionelles Alkoxysilan mit einem Methacrylat copolymerisert werden. Die Herstellung von Alkoxysilan-funktionellen Polyurethanen ist beispielsweise durch Umsetzung eines Isocyanat-funktionellen Prepolymers mit einem aminofunktionellen Alkoxysilan, das Gruppen der allgemeinen Formeln [1a], [1b] oder [1c] trägt, möglich.

Alkoxysilyl-funktionelle Polymere **(P)** können beispielsweise durch Reaktion eines α,ω-SiOH-funktionellen Siloxans oder SiOH-funktionellen Siliconharzes mit Silanen der allgemeinen Formel [10],

R^{5a}₄₋ₙSi(O-C(R¹)(R²)(R³))ₙ [10]

oder deren Hydrolyse- und Kondensationsprodukten,
wobei
**n** die Werte 1, 2 oder 3 und
**R¹, R², R³** und **R^{5a}** die oben genannten Bedeutungen aufweisen, oder Kondensation der Silane der allgemeinen Formel [10] oder Cokondensation der Silane der allgemeinen Formel [10] mit den Silanen der allgemeinen Formel [73],

YₑSiR⁸₄₋ₑ [73],

oder deren Hydrolyse- und Kondensationsprodukten,
wobei
- **Y**: Wasserstoff, eine OH-Gruppe, Halogen, eine Alkoxygruppe mit 1-12 Kohlenstoffatomen, einen Carboxylrest mit 1-12 Kohlenstoffatomen,
- **R⁸**: einen gegebenenfalls Heteroatom-substituierten aliphatischen oder aromatischen Kohlenwasserstoffrest mit 1-12 Kohlenstoffatomen bedeuten und
- **e**: die Werte 1, 2, 3 und 4 annehmen kann,
oder das dem Fachmann bekannte Verfahren der Äquilibrierung eines Organopolysiloxans der allgemeinen Formel [72] mit einem oder mehreren Silanen der allgemeinen Formel [10] oder deren Hydrolyse- oder Kondensationsprodukten erhalten werden.

Die Verbindungen **(V)** enthalten im Mittel 1 bis 10000 Alkoxysilylgruppen der allgemeinen Formeln [1a], [1b] oder [1c] pro Molekül. Handelt es sich bei der Verbindung **(V)** um eine niedermolekulare Verbindung **(N),** so ist die Anzahl der Alkoxysilylgruppen der allgemeinen Formeln [1a], [1b] oder [1c] bevorzugt gleich **1.** Die Anzahl der Reste -O-C(R¹)(R²)(R³) pro Alkoxysilylgruppe beträgt 1, 2 oder 3. Besonders bevorzugt beträgt die Anzahl 2 oder 3.
Handelt es sich bei den Verbindungen **(V)** um Polymere **(P),** so liegt die Anzahl der Alkoxysilylgruppen der allgemeinen Formeln [1a] [1b] oder [1c] bevorzugt bei 1 bis 10000. Besonders bevorzugt liegt die Anzahl der Alkoxysilylgruppen der allgemeinen Formeln [1a], [1b] oder [1c] bei 5 bis 1000. Dabei beträgt die Anzahl der Reste -O-C(R¹)(R²)(R³) pro Alkoxysilylgruppe 1, 2 oder 3. Besonders bevorzugt beträgt die Anzahl 2 oder 3.

Des Weiteren können die Polymerabmischungen **(A)** organische Polymere und Siloxane enthalten. Bevorzugt sind Polymere und Siloxane, die Gruppen tragen, welche durch Reaktion mit Wasser SiOH-Gruppen ausbilden oder eine Kondensationsreaktion mit SiOH-tragenden Molekülen eingehen können, oder SiOH-Gruppen tragen. Beispiele für derartige organische Polymere und Siloxane sind SiOH-funktionelle Siliconöle und Siliconharze sowie Siloxane und organische Polymere, die hydrolysierbare Si-OAlkyl-Gruppen, wie sie beispielsweise in der DE 10 2006 022 095 A1 beschrieben sind, tragen.

Besonders bevorzugt enthalten die Polymerabmischungen **(A)** lineare, verzweigte oder cyclische Organopolysiloxane der allgemeinen Formel [72], wobei
- **R⁷**: die Bedeutung des Restes **R⁵** annimmt,
- **a, b, c** und **d**: einen ganzzahligen Wert von größer oder gleich 0 bedeuten, mit der Maßgabe, dass die Summe aus **a + b + c** mindestens 1 ist und
- **R¹, R², R³** und **R⁵**: die oben angegebenen Bedeutungen annehmen können,
wobei die Reste **R⁷** bevorzugt eine Methyl-, Ethyl-, Propyl-, Butyl-, Octyl-, Phenyl-, OH-Gruppe, Methoxy, Ethoxy, Propoxy, Butoxy, Acetoxy oder eine Gruppe -O-C(R¹)(R²)(R³) bedeuten.

Besonders bevorzugt handelt es sich bei den als Bestandteil der Polymerabmischung **(A)** eingesetzten linearen, verzweigten oder cyclischen Organopolysiloxanen der allgemeinen Formel [72] um Siloxane, die in terminaler und / oder lateraler Position Alkoxysilylgruppen, oder in terminaler Position OH-Gruppen tragen.

Die beim erfindungsgemäßen Verfahren durch Abspaltung aus den Verbindungen **(V)** entstehenden Moleküle **(XY)** liegen bei den Verarbeitungsbedingungen bevorzugt als gasförmige Moleküle vor, die zur Schaumbildung in der Polymerabmischung **(A)** führen, und können anorganische oder organische Verbindungen sein. Die Moleküle **(XY)** können beispielsweise Kohlenwasserstoffe wie Alkane, Alkene, Alkine, oder Aromaten sein, oder Alkohole, Ether, Amine, Ester, Amide, Heterocyclen, CO₂, Stickstoff oder Wasser sein.
Bevorzugt handelt es sich bei den Molekülen **(XY)** um ungesättigte organische Verbindungen und Kohlendioxid, besonders bevorzugt um ungesättigte organische Verbindungen, insbesondere der allgemeinen Formel [73a]

(R¹⁰)(R¹¹)C=C(R¹²)(R¹³) [73a],

wobei **R¹⁰, R¹¹, R¹²** und **R¹³** die für **R¹, R²** und **R³** genannten Bedeutungen aufweisen.

Beispiele für besonders bevorzugte Moleküle **(XY)** stellen die Verbindungen [74] - [87] dar.

(CH₃)₂C=CH₂ [74]

(CH₃)₂C=CH-CH₃ [75]

(CH₃)(C₂H₅)C=CH₂ [76]

(CH₃)(C₆H₅)C=CH₂ [77]

(CH₃)(C₂H₅)C=CH-CH₃ [78]

(C₂H₅)₂C=CH-CH₃ [79]

(C₂H₅)₂C=CH₂ [80]

H₂C=C(CH₃)(CO₂CH₃) [81]

H₂C=C(CH₃)(CO₂C₂H₅) [82]

H₂C=C(CO₂CH₃)₂ [83]

H₂C=C(CO₂C₂H₅)₂ [84]

(C₆H₅)CH=CH₂ [85]

H₂C=CH(CO₂CH₃) [86]

H₂C=CH(CO₂C₂H₅) [87]

Die Verbindungen **(XY)** entstehen beim erfindungsgemäßen Verfahren bevorzugt durch Umwandlung der Alkoxysilylgruppen der Formeln [1a], [1b] oder [1c], beispielsweise durch thermisch-, radikalisch- oder strahleninduzierte Abspaltung.

Die Verbindungen **(XY)** können beispielsweise wie in den Gleichungen [a] - [c] dargestellt gebildet werden.

≡Si-O-C(CH₃)₂-CH₃ -> ≡Si-O-H + (CH₃)₂C=CH₂ [a]

≡Si-O-C(CH₃)₂-CO₂CH₃ -> ≡Si-O-H + H₂C=C(CH₃)(CO₂CH₃) [b]

≡Si-O-CH(C₅H₆)-CH₃ -> ≡Si-O-H + (C₆H₅)CH=CH₂ [c]

Bevorzugt entstehen bei der Bildung der Moleküle **(XY)** aus den Verbindungen **(V)** reaktive Gruppen, wie beispielsweise Silanol ≡Si-O-H, die zur Reaktion untereinander oder mit anderen zur Kondensationsreaktion befähigten funktionellen Gruppen der Polymerabmischung, wie beispielsweise weiteren Silanolgruppen ≡Si-OH, Alkoxysilylgruppen oder Si-Cl-Gruppen befähigt sind und so zum Härten der Polymerabmischung **(A)** beitragen.

Bevorzugte Katalysatoren **(K)** sind Lewis-Säuren und Brönstedt-Säuren. Beispiele für geeignete Lewis-Säuren sind Zinn, Zinnoxid sowie Zinnverbindungen, wie z.B. Dibutylzinndilaurat (DBTL), Titan, Titanoxid sowie Titanverbindungen, wie z.B. Titan(IV)isopropanolat, Kupfer, Kupferoxid sowie Kupferverbindungen, wie z.B. Kupfer(I)trifluormethansulfonat, Eisen, Eisenoxid sowie Eisenverbindungen, wie z.B. Eisen(III)chlorid, Eisen(III)acetylacetonat, Mangan, Manganoxid sowie Manganverbindungen, wie z.B. Mangan(II)acetylacetonat, Aluminium, Aluminiumoxid sowie Aluminiumverbindungen, wie z.B. Aluminium(III)chlorid, Aluminium(III)isopropanolat, Trimethylaluminium, Bor, Boroxid sowie Borverbindungen, wie z.B. Bortrichlorid, Zirkonium, Zirkoniumoxid sowie Zirkoniumverbindungen, wie z.B. Zr(IV)acetylacetonat, Gallium, Galliumoxid sowie Galliumverindungen, z.B. Gallium(III)acetylacetonat, Cer, Ceroxid sowie Cerverbindungen, wie z.B. Cer(III)chlorid und Zink, Zinkoxid sowie Zinkverbindungen, wie z.B. Zinklaurinat bzw. Zinkpivalat. Beispiele für geeignete Brönstedt-Säuren sind Carbonsäuren, wie beispielsweise Laurinsäure, Sulfonsäuren, wie beispielsweise Trifluormethansulfonsäure, p-Toluosulfonsäure und Dodecylbenzolsulfonsäure, Mineralsäuren, wie beispielsweise Salzsäure, Salpetersäure und Phosphorsäure. Zudem eignen sich auch Verbindungen, die bei Bestrahlung mit energiereicher Strahlung, wie beispielsweise UV-Licht oder Elektronenstrahlung, unter Zersetzung Protonen freisetzen. Beispielhaft seien für derartige Verbindungen Diaryliodoniumverbindungen, wie beispielsweise {4-[(2-Hydroxytetradecyl)-oxy]-phenyl}phenyliodonium-hexafluoroantimonat, Diphenyliodoniumnitrat, Bis(4-tert.-butylphenyl)iodonium-p-toluolsulfonat, Bis(4-tert.-butylphenyl)iodonium-trifluormethansulfonat, Triarylsulfoniumverbindungen, wie beispielsweise Triphenylsulfoniumtrifluormethansulfonat, 4-(Thiophenoxyphenyl)-diphenylsulfonium-hexafluoroantimonat, (4-Bromphenyl)diphenylsulfoniumtrifluormethansulfonat und N-Hydroxynaphthalimidetrifluormethansulfonat sowie 2-(4-Methoxystyryl)-4,6-bis(trichlormethyl)-1,3,5-triazin genannt.

Insbesondere kommen Katalysatoren **(K)** zum Einsatz, die eine Kondensation zwischen zwei Silanolgruppen, zwischen einer Silanolgruppe und einer Alkoxysilylgruppe, zwischen einer Silanolgruppe und einer Si-Cl-Gruppe bzw. zwischen einer Alkoxysilylgruppe oder Si-Cl-Gruppe und Wasser beschleunigen. Zudem können Mischungen verschiedener Katalysatoren **(K)** zum Einsatz kommen. Der Katalysator **(K)** wird bevorzugt in einer Konzentration von mindestens 10 ppm, besonders bevorzugt mindestens 0,1 Gew.-%, jeweils bezogen auf die Polymerabmischung **(A),** eingesetzt. Der Katalysator **(K)** wird bevorzugt in einer Konzentration von höchstens 20 Gew.-%, besonders bevorzugt höchstens 10 Gew.-%, insbesondere höchstens 5 Gew.-%, jeweils bezogen auf die Polymerabmischung **(A)** eingesetzt.

Die Polymerabmischungen **(A)** können lösemittelfrei oder auch lösemittelhaltig sein. Beispiele für geeignete organische Lösemittel sind Benzine, n-Heptan, Benzol, Toluol, Xylole, halogenierte Alkane mit 1 bis 6 Kohlenstoffatomen, Ether, Ester wie beispielsweise Ethylacetat, Ketone wie beispielsweise Aceton oder Methylethylketon, Amide wie beispielsweise Dimethylacetamid und Dimethylsulfoxid, Alkohole wie beispielsweise Ethanol, n-Propanol, iso-Propanol oder n-Butanol.

Des Weiteren können die Polymerabmischungen **(A)** Additive **(Q),** z.B. Verlaufshilfsmittel, Wasserfänger, Fungizide, Flammschutzmittel, Dispergierhilfsmittel, Farbstoffe, Weichmacher, Hitzestabilisatoren, Mittel zur Einstellung der Trennkraft, Anti-Misting-Additive wie sie beispielsweise in der WO 2006/133769 beschrieben sind, Duftstoffe, oberflächenaktive Substanzen, Haftvermittler, Fasern, wie beispielsweise Glasfasern, Kunststofffasern, Lichtschutzmittel wie UV-Absorber und Radikalfänger und partikuläre Füllstoffe, wie beispielsweise Russ, Pigmente wie z.B. Eisenoxidschwarz, Quarz, Talk, pyrogene Kieselsäure, Kreiden oder Aluminiumoxid, enthalten.
Besonders bevorzugt kommen als Additive **(Q)** gefällte und pyrogene Kieselsäuren, sowie Gemische derselben, zum Einsatz. Die spezifische Oberfläche dieser Füllstoffe sollte mindestens 50 m²/g betragen oder vorzugsweise im Bereich von 100 bis 400 m²/g gemäß der Bestimmung nach der BET-Methode liegen. Die genannten Kieselsäurefüllstoffe können hydrophilen Charakter haben, nach bekannten Verfahren hydrophobiert sein, oder anderweitig an der Oberfläche chemisch funktionalisiert sein. Der Gehalt an Additiven **(Q)** in den Polymerabmischungen **(A)** liegt typischerweise im Bereich von 0 bis 70 Gew.-%, vorzugsweise bei 0 bis 50 Gew.-%.

Zudem können die Polymerabmischungen **(A)** Verbindungen **(I)** enthalten, die unter thermischem Einfluss oder durch Bestrahlung mit UV-Licht freie Radikale bilden. Beispiele für diese Verbindungen **(I)** sind dem Fachmann bekannte thermische und photochemische Polymerisationsinitiatoren, wie sie beispielsweise im "Handbook of Free Radical Initiators" von E. T. Denisov, T. G. Denisova und T. S. Pokidova, Wiley-Verlag, 2003, beschrieben sind.

Beispiele für thermische Initiatoren (I) sind tert.-Butylperoxid, tert.-Butyl-peroxopivalat, tert.-Butyl-peroxo-2-ethylhexanoat, Dibenzoylperoxid, Dilauroylperoxid, Azobisisobutyronitril, tert.-Butyl-peroxobenzoat, oder Cumylhydroperoxid. Beispiele für Photoinitiatoren **(I)** sind Benzophenon, 2-Hydroxy-2-methyl-1-phenyl-1-propanon, 1-Hydroxycyclohexylphenylketon oder Methylbenzoylformiat.

Zur Herstellung der Polymerabmischungen **(A)** können die einzelnen Komponenten in beliebiger Reihenfolge miteinander vermischt werden. Die Herstellung der Polymerabmischungen **(A)** kann dabei in kontinuierlicher oder diskontinuierlicher Weise erfolgen. Die Polymerabmischungen **(A)** können vorzugsweise als 1-komponentige (1K) oder 2-komponentige (2K) Systeme hergestellt werden.

Beim Verfahren zur Herstellung siliconbasierter Schäume wird die Polymerabmischungen **(A)** vorzugsweise für 1 s bis 48 h auf eine Temperatur gebracht, bei der die durch Reaktion der Verbindung **(V)** entstehenden Moleküle **(XY)** gasförmig sind und zum Aufschäumen der Mischung führen. Die Schaumbildung kann dabei beim Verabeiten der Polymerabmischungen **(A)** bei Atmosphärendruck (= Luftdruck der am Verarbeitungsort herrscht), bei vermindertem Druck von beispielsweise 0,01 bis 0,1 MPa oder auch bei erhöhtem Druck stattfinden. Bevorzugt erfolgt die Verarbeitung bei vermindertem Druck oder Atmosphärendruck. Besonders bevorzugt erfolgt die Verarbeitung bei Atmosphärendruck.
vorzugsweise werden die Polymerabmischungen **(A)** auf eine Temperatur von mindestens 5 °C, besonders bevorzugt mindestens 20 °C, insbesondere mindestens 80 °C bis 300 °C, besonders bevorzugt bis 250 °C, insbesondere bis 200°C erwärmt. Enthalten die Polymerabmischungen **(A)** als Verbindungen **(V)** Polymere **(P),** deren Polymerreste **(PR)** Organopolysiloxane sind, so wird die Härtung bevorzugt bei einer Temperatur von 5 °C bis 200 °C durchgeführt. Enthalten die Polymerabmischungen **(A)** als Verbindungen **(V)** dagegen niedermolekulare Verbindungen **(N)** oder Polymere **(P),** deren Polymerreste **(PR)** organische Polymerreste darstellen, so erfolgt die Härtung bei 5 °C bis 300 °C.

Als Energiequellen für die Vernetzung der Polymerabmischungen **(A)** durch Erwärmen werden vorzugsweise Öfen, z.B. Umlufttrockenschränke, Heizkanäle, beheizte Walzen, beheizte Platten, Infrarot-Wärmestrahler oder Mikrowellen verwendet. Die Polymerabmischungen **(A)** können auch durch Bestrahlen mit Ultraviolettlicht oder Elektronenstrahlung vernetzt werden.

In einer besonders bevorzugten Ausführungsform des Verfahrens erfolgt die Härtung durch thermische Zersetzung der Alkoxysilylgruppe der allgemeinen Formel [1] unter Bildung von Silanolgruppen ≡Si-OH und eine anschließende Kondensation der Silanolgruppen ≡Si-OH untereinander oder mit anderen zur Kondensationsreaktion befähigten funktionellen Gruppen der Polymerabmischung, wie beispielsweise Silanolgruppen ≡Si-OH, Alkoxysilylgruppen oder Si-Cl-Gruppen

Die Polymerabmischungen **(A)** können bevorzugt als 1-komponentige (1K) oder 2-komponentige (2K) Systeme verarbeitet werden. In Form eines 1K-Systems wird die Polymerabmischung **(A)** zur Härtung ohne Zugabe weiterer Komponenten wie beschrieben erhitzt.
Im Falle eines 2K-Systems werden die getrennt voneinander gelagerten Bestandteile Verbindung **(V)** und Katalysator **(K)** erst kurz vor der Verarbeitung mit den weiteren Komponenten zur Polymerabmischung **(A)** vermischt. Dabei kann Verbindung **(V)**,oder Katalysator **(K)** jeweils mit Bestandteilen der Polymerabmischung **(A)** lagerstabile Mischungen bilden.
Die Zeit, in der die Polymerabmischungen **(A)** in einem verarbeitungsfähigen Zustand sind (= Topfzeit) kann durch die Zugabe von Additiven **(Q)** oder Lösemitteln eingestellt werden. Bevorzugt wird die Topfzeit durch die Zugabe von Lösemitteln wie beispielsweise Alkoholen eingestellt. Besonders bevorzugt durch die Zugabe von Ethanol, n-Propanol, iso-Propanol oder n-Butanol.

Das erfindungsgemäße Verfahren zur Herstellung von Schäumen durch platinfreie Härtung der Polymerabmischungen **(A)** kann für alle Zwecke eingesetzt werden, für die Verfahren zur Herstellung von schaumförmigen Polymeren, insbesondere schaumförmigen elastomeren Siloxanen, schaumförmigen Siliconharzen und schaumförmigen organischen Polymere typischerweise eingesetzt werden.

Besonders geeignet ist das erfindungsgemäße Verfahren zur Herstellung von Schaumschichten und geschäumten Formkörpern auf und zwischen textilen Flächengebilden, wie z.B. Geweben, Vliesen, Gestricken, Gelegen, Wirkwaren, Filzen oder Kettwirkwaren. Die textilen Flächengebilde können dabei gefertigt sein aus Naturfasern, wie Baumwolle, Wolle, Seide etc., oder auch aus Kunstfasern wie Polyolefin, Polyester, Polyamid, Aramid etc. Auch aus Mineralfasern, wie z.B. Glas oder Silikaten oder Metallfasern können die Textilien gefertigt sein. Eine bevorzugte Nutzung des Verfahrens ist die Erzeugung von elastischen Schaumlaminaten auf textilen Flächengebilden und zwischen textilen Flächengebilden.

Desweiteren kann das erfindungsgemäße Verfahren auch zur Herstellung von Schaumschichten und geschäumten Formkörpern auf und zwischen Oberflächen aus mineralischen Stoffen wie z.B. Steinen, Ziegeln, Platten, Beton, Putzen, Kunststoffen, Naturstoffen oder Metallen verwendet werden.
Auch stellen die nach dem erfindungsgemäßen Verfahren hergestellten Schaumschichten und -geschäumten Formkörper Materialien dar, die für hitzebeständige und dämpfende Auflagen auf Metallen geeignet sind. In Abhängigkeit von ihrer Zusammensetzung können die Schaumschichten und -geschäumten Formkörper bis zu einer Temperatur von 700 °C eingesetzt werden. Als Anwendungen für derartige Materialien seien beispielhaft Grill-, Ofen-, Motoren-, Auspuffteile und weitere Bauelemente aus dem Fahrzeugbau und der Luft- und Raumfahrttechnik genannt.
Ebenso können die nach dem erfindungsgemäßen Verfahren hergestellten Schaumschichten und geschäumten Formkörper die Korrosionsbeständigkeit der beschichteten Materialien verbessern.

Ebenfalls geeignet ist das erfindungsgemäße Verfahren zur Herstellung von Schaumschichten und geschäumten Formkörpern auf und zwischen Papier, Kunststofffolien (z.B. Polyethylenfolien, Polypropylenfolien, Polyesterfolien), Holz, Kork, silikatischen und metallischen Substraten sowie sonstigen polymeren Substraten, wie z.B. Polycarbonat, Polyurethan, Polyamid und Polyester.
Bei dem eingesetzten Papier kann es sich um minderwertige Papiersorten, wie saugfähige Papiere, einschließlich rohem, d.h. nicht mit Chemikalien und/oder polymeren Naturstoffen vorbehandeltes Kraftpapier mit einem Gewicht von 60 bis 150 g/m², ungeleimte Papiere, Papiere mit niedrigem Mahlgehalt, holzhaltige Papiere, nicht satinierte oder nicht kalandrierte Papiere, Papiere, die durch die Verwendung eines Trockenglättzylinders bei ihrer Herstellung ohne weitere aufwendige Maßnahmen auf einer Seite glatt sind, unbeschichtete Papiere oder aus Papierabfällen hergestellte Papiere handeln. Bei dem Papier kann es sich aber auch um hochwertige Papiersorten handeln, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere.
Die nach dem erfindungsgemäßen Verfahren mit Schaumschichten und geschäumten Formkörpern belegten Papiere und Folien eignen sich beispielsweise zum Herstellen von Trenn-, Abdeck- und Mitläuferpapieren, einschließlich Mitläuferpapieren, die bei der Herstellung von z.B. Gieß- oder Dekorfolien oder von Schaumstoffen eingesetzt werden. Sie eignen sich weiterhin zur Herstellung von Trenn-, Abdeck- und Mitläuferpapieren, -folien und -tüchern für die Ausrüstung der Rückseiten von selbstklebenden Bändern oder selbstklebenden Folien oder der beschrifteten Seiten von selbstklebenden Etiketten.
Das erfindungsgemäße Verfahren zur Herstellung von Schaumschichten und geschäumten Formkörpern eignet sich auch für die Ausrüstung von Verpackungsmaterial, wie solchem aus Papier, Pappschachteln, Metallfolien und Fässern, die beispielsweise für die Lagerung und/oder den Transport von klebrigen Gütern, wie Klebstoffen und klebrigen Lebensmitteln bestimmt sind.

Ein weiteres Beispiel für die Anwendung der nach dem erfindungsgemäßen Verfahren belegten Oberflächen ist die Ausrüstung von Trägern zum Übertragen von Haftklebeschichten beim sogenannten "Transfer-Verfahren".

Zur Applikation der Polymermischung (A) auf und zwischen die genannten Oberflächen zum Zwecke der erfindungsgemäßen Verarbeitung zu Schaumschichten und geschäumten Formkörpern kommen dem Fachmann geläufige Verfahren, wie z.B. Rakelverfahren, Tauchverfahren, Extrusionsverfahren, Spritz-oder Sprühverfahren sowie Schleuderverfahren, zum Einsatz. Auch alle Arten von Rollenbeschichtungen, wie Gravurwalzen, Pflatschen oder ein Auftrag über Mehrwalzensysteme sowie Siebdruck sind möglich.
Die Dicke der erzeugten Schaumschichten und geschäumten Formkörper beträgt vorzugsweise je nach Anwendungszweck und Verarbeitungsmethode zwischen 0,5µm und 100cm.

Das erfindungsgemäße Verfahren eignet sich ebenfalls zur Herstellung von geschäumten Formkörpern, die einen Träger umschließen. So können Polymerabmischungen (A) beispielsweise zu geschäumten Kabelummantelungen und Rohrummantelungen verarbeitet werden.

Ebenfalls geeignet ist das erfindungsgemäße Verfahren zur Herstellung von schaumförmigen Kleb-, Dicht- und Fugendichtstoffen oder Verkittungsmassen. Einsatzmöglichkeiten liegen beispielsweise im Fensterbau, bei der Herstellung von Aquarien oder Vitrinen sowie für die Isolierung von elektrischen oder elektronischen Vorrichtungen. Als Untergründe sind dabei typischerweise mineralische Untergründe, Metalle, Kunststoffe, Glas und Keramiken geeignet.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben sind alle Mengen- und Prozentangaben auf das Gewicht bezogen, alle Drücke 0,10 MPa (abs.) und alle Temperaturen 20 °C.

### Beispiel 1: Härtung einer Polymerabmischung

Eine Mischung enthaltend 18,75 g (1,25 mmol) α,ω-SiOH terminiertes Polydimethylsiloxan (Mw = 15000 g/mol; Viskosität = 1000-1200 mPas), 0,75 g (2,475 mmol) Tris(tert.-pentoxy)silanol [CAS Nr. 17906-35-3], 0,09 g n-Butanol und eine Lösung von 0,023 g Dodecylbenzolsulfonsäure in 0,25 mL Ethylacetat wird auf ein Polyamidgewebe (235 dtex, 150 g/m²) in einer Schichtdicke von 2 mm aufgetragen. Anschließend wird das beschichtete Gewebe in einem Umluftofen bei 170 °C für 4 min. erhitzt. Es entsteht eine auf dem Polyamidgewebe haftende Schaumschicht.

### Beispiel 2: Härtung einer Polymerabmischung

Eine Mischung enthaltend 2,2 g hochdisperse Kieselsäure (BET-Oberfläche = 130 m²/g), 4,5 g α,ω-SiOH terminiertes Polydimethylsiloxan (gemitteltes Mw = 46000 g/mol; Viskosität = 18000-22000 mPas), 3,3 g α,ω-SiOH terminiertes Polydimethylsiloxan (gemitteltes Mw = 71000 g/mol; Viskosität = 70000-80000 mPas), 5,0 g α,ω-SiOH terminiertes Polydimethylsiloxan(gemitteltes Mw = 15000 g/mol; Viskosität 1000-1200 mPas), 2,5 g (8,25 mmol) Tris(tert.-pentoxy)silanol ([CAS Nr. 17906-35-3]; Mw = 303,03 g/mol), 0,68 g n-Butanol und eine Lösung von 0,075 g Dodecylbenzolsulfonsäure in 0,8 ml Ethylacetat wird auf ein Polyamidgewebe (235 dtex, 150 g/m²) in einer Schichtdicke von 2 mm aufgetragen.

Anschließend wird das beschichtete Gewebe in einem Umluftofen bei 170 °C für 4 min. erhitzt. Es entsteht eine auf dem Polyamidgewebe haftende Schaumschicht.

### Beispiel 3: Härtung einer Polymerabmischung

Eine Mischung enthaltend 12,00 g (0,169 mmol) α,ω-SiOH terminiertes Polydimethylsiloxan (gemitteltes Mw = 71000 g/mol; Viskosität = 70000-80000 mPas), 1,5 g (4,95 mmol) Tris(tert.-pentoxy)silanol ([CAS Nr. 17906-35-3]; Mw = 303,03 g/mol), 0,03 g n-Butanol und eine Lösung von 0,045 g Dodecylbenzolsulfonsäure in 0,5 ml Ethylacetat wird auf ein Polyamidgewebe (235 dtex, 150 g/m²) in einer Schichtdicke von 2 mm aufgetragen. Anschließend wird das beschichtete Gewebe in einem Umluftofen bei 170 °C für 4 min. erhitzt. Es entsteht eine auf dem Polyamidgewebe haftende Schaumschicht.

### Beispiel 4: Härtung einer Polymerabmischung

Eine Mischung enthaltend 18,75 g (0,408 mmol) α,ω-SiOH terminiertes Polydimethylsiloxan (gemitteltes Mw = 46000 g/mol; Viskosität = 18000-22000 mPas), 0,75 g (2,48 mmol) Tris(tert.-pentoxy)silanol ([CAS Nr. 17906-35-3]; Mw = 303,03 g/mol) und eine Lösung von 0,023 g Dodecylbenzolsulfonsäure in 0,25 ml Ethylacetat wird auf ein Polyamidgewebe (235 dtex, 150 g/m²) in einer Schichtdicke von 2 mm aufgetragen. Anschließend wird das beschichtete Gewebe in einem Umluftofen bei 170 °C für 4 min. erhitzt. Es entsteht eine auf dem Polyamidgewebe haftende Schaumschicht.

### Beispiel 5: Härtung einer Polymerabmischung

Eine Mischung enthaltend 15,63 g (1,04 mmol) α,ω-SiOH terminiertes Polydimethylsiloxan (gemitteltes Mw = 15000 g/mol; Viskosität = 1000-1200 mPas), 1,25 g (4,125 mmol) Tris(tert.-pentoxy)silanol ([CAS Nr. 17906-35-3]; Mw = 303,03 g/mol) und eine Lösung von 0,0375 g Dodecylbenzolsulfonsäure in 0,41 ml Ethylacetat wird auf ein Polyamidgewebe (235 dtex, 150 g/m²) in einer Schichtdicke von 2 mm aufgetragen. Anschließend wird das beschichtete Gewebe in einem Umluftofen bei 170 °C für 4 min. erhitzt. Es entsteht eine auf dem Polyamidgewebe haftende Schaumschicht.

### Beispiel 6: Härtung einer Polymerabmischung

Eine Mischung enthaltend 15,00 g (1,35 mmol) α,ω-SiOH terminiertes Polydimethylsiloxan (gemitteltes Mw = 11100 g/mol; Viskosität = 450-600 mPas), 1,5 g (4,95 mmol) Tris(tert.-pentoxy)silanol ([CAS Nr. 17906-35-3]; Mw = 303,03 g/mol) und eine Lösung von 0,045 g Dodecylbenzolsulfonsäure in 0,5 ml Ethylacetat wird auf ein Polyamidgewebe (235 dtex, 150 g/m²) in einer Schichtdicke von 2 mm aufgetragen. Anschließend wird das beschichtete Gewebe in einem Umluftofen bei 170 °C für 4 min. erhitzt. Es entsteht eine auf dem Polyamidgewebe haftende Schaumschicht.

### Beispiel 7: Härtung einer Polymerabmischung

Eine Mischung enthaltend 15,00 g (5 mmol) α,ω-SiOH terminiertes Polydimethylsiloxan (gemitteltes Mw = 3000 g/mol; Viskosität = 50-100 mPas), 1,36 g (4,65 mmol) Di-tert.-Butoxy-diacetoxysilan ([CAS Nr. 13170-23-5]; Mw = 292,4 g/mol) und eine Lösung von 0,068 g Triphenylsulfoniumtrifluormethansulfonat in 0,5 ml Aceton wird auf ein Polyamidgewebe (235 dtex, 150 g/m²) in einer Schichtdicke von 2 mm aufgetragen. Anschließend wird das beschichtete Gewebe für 30 sec. mit UV-Licht der Wellenlänge 254 nm bestrahlt. Es entsteht eine auf dem Polyamidgewebe haftende Schaumschicht.

### Beispiel 8: Härtung einer Polymerabmischung

Eine Mischung enthaltend 15,00 g (5 mmol) α,ω-SiOH terminiertes Polydimethylsiloxan (gemitteltes Mw = 3000 g/mol; Viskosität = 50-100 mPas), 1,36 g (4,65 mmol) Di-tert.-Butoxy-diacetoxysilan ([CAS Nr. 13170-23-5]; Mw = 292,4 g/mol) und 2 g einer 4%-igen Lösung von Titanacetylacetonat (CAS Nr. 97281-09-9) in Ethylacetat wird auf ein Polyamidgewebe (235 dtex, 150 g/m²) in einer Schichtdicke von 2 mm aufgetragen. Anschließend wird das beschichtete Gewebe in einem Umluftofen bei 170 °C für 5 min. erhitzt. Es entsteht eine auf dem Polyamidgewebe haftende Schaumschicht.

## Patentansprüche

1. Verfahren zur Herstellung von siliconbasierten Schäumen aus siliconhaltigen Polymerabmischungen **(A),**
bei dem mindestens eine Verbindung **(V)** eingesetzt wird, die zur Bildung des Polymernetzwerks beiträgt und die mindestens eine Alkoxysilylgruppe der allgemeinen Formeln [1a], [1b] oder [1c]
≡Si-O-C(R¹)(R²)(R³) [1a],
≡Si(R⁵)-O-C(R¹)(R²)(R³) [1b],
≡Si-O-C(O)-U [1c],
trägt, aus der bei der Härtung der Polymerabmischungen **(A)** mindestens ein Molekül **(XY)** abgespalten wird, welches bei der Verarbeitung gasförmig ist und eine Schaumbildung in der Polymerabmischung **(A)** verursacht,
sowie einen Katalysator **(K),** der ausgewählt wird aus einer Brönstedt-Säure, Brönstedt-Base, Lewis-Säure und Lewis-Base,
wobei
**R¹, R², R³** Wasserstoff, ein Halogen, einen über ein Kohlenstoffatom gebundenen Rest, wobei die Reste **R¹, R², R³** miteinander verbunden sein können, oder einen zweiwertigen über ein Kohlenstoffatom gebundenen Rest, der zwei Alkoxysilylgruppen der allgemeinen Formel [1a], [1b] oder [1c] verbindet, mit der Maßgabe, dass höchstens 2 der Reste **R¹, R², R³** Wasserstoff bedeuten und Alkoxysilylreste der Formel ≡Si-O-CH₂-R⁴ ausgenommen sind,
**R⁴** einen unverzweigten aliphatischen Kohlenwasserstoffrest mit 1-12 Kohlenstoffatomen,
**R⁵** Wasserstoff, ein Halogen, einen unsubstituierten oder substituierten aliphatischen, olefinischen oder aromatischen Kohlenwasserstoffrest mit 1-12 Kohlenstoffatomen, eine OH-Gruppe, eine -OR⁶-Gruppe, OC(O)R⁶-Gruppe, -OC(O)OR⁶-Gruppe, -OC(O)OM-Gruppe, einen Metalloxyrest M-O-, oder CH₂-W, wobei **W** ein Heteroatom darstellt, dessen freie Valenzen durch Kohlenwasserstoffreste abgesättigt sind,
U eine -OR⁶-Gruppe, oder eine -NR^{6a}R^{6b}-Gruppe, **R⁶, R^{6a}, R^{6b}** Wasserstoff, einen unsubstituierten oder substituierten aliphatischen, olefinischen oder aromatischen Kohlenwasserstoffrest mit 1-12 Kohlenstoffatomen und
**M** ein Metallatom, das freie Valenzen aufweisen kann, die durch Liganden abgesättigt sind, bedeuten und
wobei Polymerabmischungen **(A)** ausgeschlossen sind, die bei der Vernetzung SiO₂ bilden.

2. Verfahren nach Anspruch 1, bei dem die Reste **R¹, R², R³** Methyl-, Ethyl-, Propyl-, Vinyl-, Phenyl- oder Carboxylreste -C(O)OR⁶ darstellen, wobei **R⁶** die in Anspruch 1 aufgeführten Bedeutungen hat.

3. Verfahren nach Anspruch 1 oder 2, bei dem die Verbindungen **(V)** niedermolekulare Verbindungen **(N)** sind, welche in Form von Silanen der allgemeinen Formel [10]
R^{5a}₄₋ₙSi(O-C(R¹)(R²)(R³))ₙ [10]
oder deren Hydrolyse- und Kondensationsprodukten vorliegen, wobei
**n** die Werte 1, 2 oder 3
**R^{5a}** die Bedeutungen von R⁵ und
**R¹, R², R³** und **R⁵** die in Anspruch 1 oder 2 genannten Bedeutungen aufweisen.

4. Verfahren nach Anspruch 1 bis 3, bei dem die Polymerabmischungen **(A)** Polymere **(P)** enthalten, die lineare, verzweigte oder cyclische Organopolysiloxane der allgemeinen Formel [72],
(R⁷₃SiO_{1/2})ₐ(R⁷₂SiO_{2/2})_{b}(R⁷SiO_{3/2})_{c}(SiO_{4/2})_{d} [72],
sind, wobei
**R⁷** die Bedeutung des Restes **R⁵** und mindestens ein Rest **R⁷** die Bedeutung -O-C(R¹)(R²)(R³) annimmt,
**a, b, c** und **d** einen ganzzahligen Wert von größer oder gleich 0 bedeuten, mit der Maßgabe, dass die Summe aus **a** + **b + c** mindestens 1 ist und
**R¹, R², R³** und **R⁵** jeweils unabhängig voneinander die in Anspruch 1 oder 2 genannten Bedeutungen annehmen können.

5. Verfahren nach Anspruch 1 bis 4, bei dem die Moleküle (XY) ungesättigte organische Verbindungen der allgemeinen Formel [73a]
(R¹⁰)(R¹¹)C=C(R¹²)(R¹³) [73a],
sind, wobei **R¹⁰, R¹¹, R¹²** und **R¹³** die für **R¹, R²** und **R³** in Anspruch 1 oder 2 genannten Bedeutungen aufweisen.

6. Verfahren nach Anspruch 1 bis 5, bei dem die Katalysatoren (K) ausgewählt werden aus Titan-, Zirkonium- und CerVerbindungen, sowie Carbonsäuren, Sulfonsäuren, Salzsäure, Salpetersäure, Phosphorsäure und Triphenylsulfoniumtrifluormethansulfonat.

7. Verfahren nach Anspruch 1 bis 6, bei dem die Polymerabmischungen **(A)** auf eine Temperatur von 20 °C bis 250 °C erwärmt werden.

8. Verfahren nach Anspruch 1 bis 7, bei dem Schaumschichten, geschäumte Formkörper, Kleb- oder Dichtmassen hergestellt werden.

9. Siliconbasierte Schäume, erhältlich aus den Polymerabmischungen **(A)** nach dem Verfahren nach Anspruch 1 bis 8.

## Claims

1. Process for producing silicone-based foams made of silicone-containing polymer blends **(A),**
by using at least one compound **(V)** which contributes to the formation of the polymer network and which bears at least one alkoxysilyl group of the general formulae [1a], [1b], or [1c]
≡Si-O-C(R¹)(R²)(R³) [1a],
=Si(R⁵)-O-C(R¹)(R²)(R³) [1b],
≡Si-O-C(O)-U [1c],
and from which at least one molecule **(XY)** is eliminated during curing of the polymer blends **(A),** where this molecule is gaseous during processing and causes foaming in the polymer blend **(A),**
and also one catalyst **(K)** which is selected from a Bronsted acid, Bronsted base, Lewis acid, and Lewis base,
where
**R¹, R², and R³** are hydrogen, a halogen, or a moiety bonded by way of a carbon atom, where the moieties **R¹, R², and R³** can have bonding to one another, or are a divalent moiety which has bonding by way of a carbon atom and which connects two alkoxysilyl groups of the general formula [1a], [1b], or [1c], with the proviso that at most 2 of the moieties **R¹, R², and R³** are hydrogen, and alkoxysilyl moieties of the formula ≡Si-O-CH₂-R⁴ have been excluded,
**R⁴** is an unbranched aliphatic hydrocarbon moiety having from 1 to 12 carbon atoms,
**R⁵** is hydrogen, a halogen, an unsubstituted or substituted aliphatic, olefinic, or aromatic hydrocarbon moiety having from 1 to 12 carbon atoms, an OH group, an -OR⁶ group, -OC(O)R⁶ group, -OC(O)OR⁶ group, -OC(O)OM group, a metaloxy moiety M-O-, or CH₂-W, where **W** is a heteroatom, the free valencies of which have been satisfied by hydrocarbon moieties,
U is an -OR⁶ group, or an -NR^{6a}R^{6b} group, **R⁶**, **R^{6a}**, **and R^{6b}** are hydrogen, or an unsubstituted or substituted aliphatic, olefinic, or aromatic hydrocarbon moiety having from 1 to 12 carbon atoms, and
**M** is a metal atom which can have free valencies which have been saturated by ligands, where polymer blends **(A)** which form SiO₂ during the crosslinking process have been excluded.

2. Process according to Claim 1, in which the moieties **R¹, R², and R³** are methyl, ethyl, propyl, vinyl, or phenyl moieties, or carboxy moieties -C(O)OR⁶, where the definition of **R⁶** is as listed in Claim 1.

3. Process according to Claim 1 or 2, in which the compounds **(V)** are low-molecular-weight compounds **(N)** which take the form of silanes of the general formula [10]
R^{5a}₄₋ₙSi(O-C(R¹)(R²)(R³))ₙ [10]
or of their hydrolysis and condensation products, where
**n** has the values 1, 2, or 3,
the definitions of **R^{5a}** are the same as those of **R⁵,** and
the definitions of **R¹, R², R³** and **R⁵** are the same as those mentioned in Claim 1 or 2.

4. Process according to any of Claims 1 to 3, in which the polymer blends **(A)** comprise polymers **(P)** which are linear, branched, or cyclic organopolysiloxanes of the general formula [72]
(R⁷₃SiO_{1/2})ₐ(R⁷₂SiO_{2/2})_{b}(R⁷SiO_{3/2})_{c}(SiO_{4/2})d [72],
where
**R⁷** assumes the definition of the moiety **R⁵,** and at least one moiety **R⁷** assumes the definition -O-C(R¹)(R²)(R³),
**a, b, c,** and **d** are an integral value greater than or equal to 0, with the proviso that the sum **a + b** + c is at least 1, and
**R¹**, **R²**, **R³**, and **R⁵** respectively, independently of one another, can assume the definitions mentioned in Claim 1 or 2.

5. Process according to any of Claims 1 to 4, in which the molecules **(XY)** are unsaturated organic compounds of the general formula [73a]
(R¹⁰)(R¹¹)C=C(R¹²)(R¹³) [73a],
where the definitions of **R¹⁰**, **R¹¹**, **R¹²**, and **R¹³** are as mentioned for **R¹, R²,** and **R³** in Claim 1 or 2.

6. Process according to any of Claims 1 to 5, in which the catalysts **(K)** are selected from titanium compounds, zirconium compounds, and cerium compounds, and also carboxylic acids, sulfonic acids, hydrochloric acid, nitric acid, phosphoric acid, and triphenylsulfonium trifluoromethanesulfonate.

7. Process according to any of Claims 1 to 6, in which the polymer blends **(A)** are heated to a temperature of from 20°C to 250°C.

8. Process according to any of Claims 1 to 7, in which foam layers, foamed moldings, adhesive masses, or sealants are produced.

9. Silicone-based foam obtainable from the polymer blends **(A)** by the process according to any of Claims 1 to 8.

## Revendications

1. Procédé de fabrication de mousses à base de silicone à partir de mélanges de polymères contenant de la silicone (A),
dans lequel au moins un composé (V) est utilisé, lequel contribue à la formation du réseau polymère et porte au moins un groupe alcoxysilyle de formule générale [1a], [1b] ou [1c]
≡Si-O-C(R¹)(R²)(R³) [1a],
=Si(R⁵)-O-C(R¹)(R²)(R³) [1b],
≡Si-O-C(O)-U [1c],
à partir duquel au moins une molécule (XY) est clivée lors du durcissement des mélanges de polymères (A), laquelle molécule est gazeuse pendant le traitement et provoque une formation de mousse dans le mélange de polymères (A),
ainsi qu'un catalyseur (K), qui est choisi parmi un acide de Brönstedt, une base de Brônstedt, un acide de Lewis et une base de Lewis,
R¹, R², R³ signifiant l'hydrogène, un halogène, un radical lié par un atome de carbone, les radicaux R¹, R², R³ pouvant être liés les uns aux autres, ou un radical bivalent lié par un atome de carbone, qui relie deux groupes alcoxysilyle de formule générale [1a], [1b] ou [1c], à condition qu'au plus 2 des radicaux R¹, R², R³ signifient l'hydrogène et que les radicaux alcoxysilyle de formule ≡Si-O-CH₂-R⁴ soient exclus,
R⁴ signifiant un radical hydrocarboné aliphatique non ramifié de 1 à 12 atomes de carbone,
R⁵ signifiant l'hydrogène, un halogène, un radical hydrocarboné aliphatique, oléfinique ou aromatique non substitué ou substitué de 1 à 12 atomes de carbone, un groupe OH, un groupe -OR⁶, un groupe -OC(O)R⁶, un groupe -OC(O)OR⁶, un groupe -OC(O)OM, un radical métalloxy M-O-ou CH₂-W, W représentant un hétéroatome dont les valences libres sont saturées par des radicaux hydrocarbonés,
U signifiant un groupe -OR⁶ ou un groupe -NR^{6a}R^{6b},
R⁶, R^{6a}, R^{6b} signifiant l'hydrogène, un radical hydrocarboné aliphatique, oléfinique ou aromatique non substitué ou substitué de 1 à 12 atomes de carbone, et
M signifiant un atome métallique, qui peut comprendre des valences libres qui sont saturées par des ligands, et
les mélanges de polymères (A) qui forment du SiO₂ lors de la réticulation étant exclus.

2. Procédé selon la revendication 1, dans lequel les radicaux R¹, R², R³ représentent des radicaux méthyle, éthyle, propyle, vinyle, phényle ou carboxyle -C(O)OR⁶, R⁶ ayant les significations données dans la revendication 1.

3. Procédé selon la revendication 1 ou 2, dans lequel les composés (V) sont des composés à faible poids moléculaire (N) qui se présentent sous la forme de silanes de formule générale [10]
R^{5a}₄₋ₙSi(O-C(R¹)(R²)(R³))ₙ [10]
ou leurs produits d'hydrolyse et de condensation,
n ayant les valeurs 1, 2 ou 3,
R^{5a} ayant les significations de R⁵ et
R¹, R², R³ et R⁵ ayant les significations données dans la revendication 1 ou 2.

4. Procédé selon les revendications 1 à 3, dans lequel les mélanges de polymères (A) contiennent des polymères (P) qui sont des organopolysiloxanes linéaires, ramifiés ou cycliques de formule générale [72]
(R⁷₃SiO_{1/2})ₐ(P⁷₂SiO_{2/2})_{b}(R⁷SiO_{3/2})_{c}(SiO_{4/2})_{d} [72]
R⁷ ayant la signification du radical R⁵ et au moins un radical R⁷ ayant la signification -O-C(R¹)(R²)(R³),
a, b, c et d signifiant un nombre entier supérieur ou égal à 0, à condition que la somme de a + b + c vaille au moins 1, et
R¹, R², R³ et R⁵ pouvant avoir à chaque fois indépendamment les uns des autres les significations données dans la revendication 1 ou 2.

5. Procédé selon les revendications 1 à 4, dans lequel les molécules (XY) sont des composés organiques insaturés de formule générale [73a]
(R¹⁰) (R¹¹)C=C(R¹²)(R¹³) [73a]
R¹⁰, R¹¹, R¹² et R¹³ ayant les significations données pour R¹, R² et R³ dans la revendication 1 ou 2.

6. Procédé selon les revendications 1 à 5, dans lequel les catalyseurs (K) sont choisis parmi les composés de titane, de zirconium et de cérium, ainsi que les acides carboxyliques, les acides sulfoniques, l'acide chlorhydrique, l'acide nitrique, l'acide phosphorique et le trifluorométhanesulfonate de triphénylsulfonium.

7. Procédé selon les revendications 1 à 6, dans lequel les mélanges de polymères (A) sont portés à une température de 20 °C à 250 °C.

8. Procédé selon les revendications 1 à 7, dans lequel des couches de mousse, des corps moulés moussés, des matières adhésives ou d'étanchéité sont fabriqués.

9. Mousses à base de silicone, pouvant être obtenues à partir des mélanges de polymères (A) par le procédé selon les revendications 1 à 8.
